(19) Europäisches Patentamt
European Patent Office
Office européen des brevets

(11) **EP 2 464 116 A1**

(12) **EUROPEAN PATENT APPLICATION**

(43) Date of publication:
**13.06.2012 Bulletin 2012/24**

(51) Int Cl.:
***H04N 7/26*** (2006.01)   ***H04N 7/50*** (2006.01)

(21) Application number: **10306400.2**

(22) Date of filing: **13.12.2010**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Thomson Licensing
92130 Issy-les-Moulineaux (FR)**

(72) Inventors:
• **Bordes, Philippe
35890, LAILLE (FR)**

• **Thoreau, Dominique
35510, CESSON SEVIGNE (FR)**
• **Francois, Edouard
35890, Bourg des-Comptes (FR)**

(74) Representative: **Streit, Arend
Deutsche Thomson OHG
European Patent Operations
Karl-Wiechert-Allee 74
30625 Hannover (DE)**

(54) **Method and device for video encoding using geometry adaptive block partitioning**

(57)   A method for video encoding using geometry adaptive block partitioning is described.

The method comprises the steps of using a current video image for determining a spatio-temporal gradient image, using the determined spatio-temporal gradient image for estimating occurrence frequencies of block partitioning parameter pairs; selecting a predetermined number of block partitioning parameter pairs, the selected block partitioning parameter pairs being the most frequent occurring block partitioning parameter pairs; and

encoding blocks of the current video image using one of the selected block partitioning parameter pairs.

Since the estimates of occurrence frequencies are determined using a spatio-temporal gradient image determined using the current video image, the parameter pairs dynamically pre-selected as available for encoding of the current video image are adapted to moving object boundaries depicted in the current video image. In encoding of boundaries of moving objects, geometry adaptive block partitioning provides the most encoding gain.

Fig. 2

**Description**

TECHNICAL FIELD

The invention is made in the field of video encoding using geometry adaptive block partitioning.

BACKGROUND OF THE INVENTION

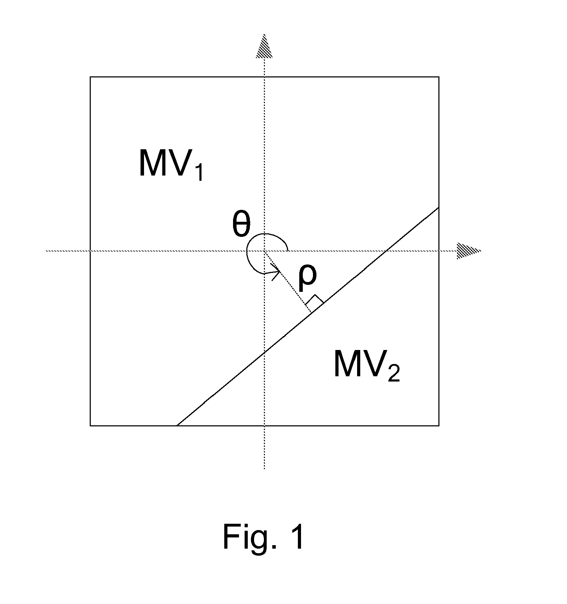

Video encoding using geometry adaptive block partitioning (GEO mode) comprises dividing a block into regions using a straight line. The GEO mode principle can be used in Intra or Inter coding.
The GEO mode option has been implemented into TMuC which is the reference software for High-Efficiency Video Coding (HEVC). The purpose of HEVC is to propose a new Video Coding Codec that improves existing Video codecs in term of compression performance.
In Inter mode, one set of motion data is sent for each region. A set of motion data comprises a prediction type. According to HEVC, a block can be predicted based on two reference lists; the block can use mono-directional prediction, using one of the lists, or multi-directional prediction using both lists. The set of motion data further comprises, for each used list, an index of reference pictures and a motion vector.
Two parameters are used to specify the separation line, as exemplarily shown in Fig. 1: Angle $\theta$ is subtended by the perpendicular line with the X axis and offset $\rho$ is a distance of the partition line from the origin or center of a block. In the TMuC implementation, all the GEO modes are evaluated (rate distortion optimization) and the GEO mode is selected if the corresponding rate-distortion-cost is minimal.
GEO is parameterized as follows:

- For block size 16x16: $\Delta\theta=11.25°$, $\Delta\rho=1$ which results in 494 possible GEO modes

- For block size 32x32: $\Delta\theta=11.25°$, $\Delta\rho=1$ which results in 238 possible GEO modes

However, due to the large number of GEO modes to test, the encoding software complexity (running time) is increased significantly: in TMuC0.9, the test of GEO modes increases the encoding time by around 400-500%. Indeed, the evaluation of a single GEO mode is very computation demanding because all the possible motion vectors (motion estimation) at subpel resolution, sub-partition (block size) and reference pictures need to be tested.
For addressing the problem of increased encoding times Kenneth Vermeirsch, et al.: "Report of complexity analysis of geometric partitioning," JTC1/SC29/WG11 JCTVC-C236, m18277, October 2010, Guangzhou, first analysed relative occurrence of values of the offset parameter $\rho$ in a test sequence. Furthermore, compression performance and complexity were compared against the number of permissible partition boundary angles $\theta$. While complexity increased roughly linear, most of the compression gains were obtained using just a few well-chosen orientations (horizontal, vertical, and diagonal). The authors proposed restricting angle parameter $\theta$ to that few well-chosen orientations and offset parameter $\rho$ to those values most frequently occurring in encoding of the test sequence. Doing so, complexity was reduced by a factor of 40 while retaining over 50% of the gains of the full GEO mode set.

SUMMARY OF THE INVENTION

The inventors recognized that by restricting angle parameter $\theta$ to that few well-chosen orientations and offset parameter $\rho$ to the most frequently occurring values in the test sequence, any flexibility for adapting the selection to the content to-be-encoded is lost.
The inventors therefore propose a selection strategy which takes into account the content to be encoded.
That is, a method according to claim 1 and a device according to claim 3 are proposed.
The proposed method comprises the steps of using a current video image for determining a spatio-temporal gradient image, using the determined spatio-temporal gradient image for estimating occurrence frequencies of block partitioning parameter pairs; selecting a predetermined number of block partitioning parameter pairs, the selected block partitioning parameter pairs being the most frequent occurring block partitioning parameter pairs; and encoding blocks of the current video image using one of the selected block partitioning parameter pairs.
Since the estimates of occurrence frequencies are determined using a spatio-temporal gradient image determined using the current video image, the parameter pairs dynamically pre-selected as available for encoding of the current video image are adapted to moving object boundaries depicted in the current video image. In encoding of boundaries of moving objects, geometry adaptive block partitioning provides the most encoding gain.
In an embodiment, determining a spatio-temporal gradient image comprises determining at least one difference images using at least two of: the current video image, a preceding video image and a succeeding video image; applying at least one Sobel filter on the determined at least one difference image for determining at least one gradient image; and determining pixels of the spatio-temporal gradient image using absolutes of pixels of the determined at least one gradient image.

This efficiently extracts boundaries of moving objects.

BRIEF DESCRIPTION OF THE DRAWINGS

Exemplary embodiments of the invention are illustrated in the drawings and are explained in more detail in the following description. The exemplary embodiments are explained only for elucidating the invention, but not limiting the invention's disclosure, scope or spirit defined in the claims.

In the figures:

Fig. 1     exemplarily depicts prior-art parameterization of a partition line by angle $\theta$ subtended by the perpendicular line with the X axis and offset $\rho$ being a distance of the partition line from the origin or centre of a block; and

Fig. 2     depicts an example of projecting pixels of a moving object's boundary section on a candidate direction of $\theta$.

EXEMPLARY EMBODIMENTS OF THE INVENTION

The invention may be realized on any electronic device comprising a processing device correspondingly adapted. For instance, the invention may be realized in a mobile phone, a personal computer or a digital video camera.

The current invention proposes a pre-selection of a subset of GEO modes candidates based on a pre-analysis of the original pictures to determine the most probable values of $\theta$ and $\rho$.

This pre-analysis can comprise, for example, extraction of spatio-temporal gradients in order to determine boundaries of moving objects. The determined boundaries are sectioned according the block pattern of the image. Next, the N most probable straight line approximations of the boundary sections are determined and $\theta$ and $\rho$ values corresponding to the determined approximations are computed.

Then, only the N GEO modes candidates corresponding to the selected $\theta$ and $\rho$ values are tested and the GEO mode with minimal encoding cost is finally retained.

Extraction of the spatio-temporal gradients can be done, for example, according the following process:

First, difference image $S_0$ between a current video image and an immediately preceding video image and difference image $S_1$ between an immediately succeeding video image and the current video image are determined:

$$S_0 = Image_t - Image_{t-1}$$

$$S_1 = Image_{t+1} - Image_t$$

Then, Sobel filters $Filter_V(i,j)$ and $Filter_H(i,j)$ are applied on the obtained difference images, the Sobel filters being defined, for instance, as follows wherein other definitions are possible:

$$Filter_V(i,j) = \{ \{1,2,1\}, \{0,0,0\}, \{1,2,1\} \}$$

$$Filter_H(i,j) = \{ \{1,0,1\}, \{2,0,2\}, \{1,0,1\} \}$$

The filtering results in four filtered difference images:

$$GSV_0(i,j) = \Sigma^2_{k=0} \; \Sigma^2_{m=0} Filter_V(k,m) S_0(i+k-1,j+m-1)$$

$$GSV_1(i,j) = \Sigma^2_{k=0} \; \Sigma^2_{m=0} Filter_V(k,m) S_1(i+k-1,j+m-1)$$

$$GSH_0(i,j) = \Sigma^2_{k=0} \; \Sigma^2_{m=0} Filter_H(k,m) S_0(i+k-1,j+m-1)$$

$$GSH_1(i,j) = \Sigma^2_{k=0} \; \Sigma^2_{m=0} Filter_H(k,m) S_1(i+k-1,j+m-1)$$

Using absolutes of $GSV_0(i,j)$, $GSV_1(i,j)$, $GSH_0(i,j)$ and $GSH_1(i,j)$, a spatio-temporal gradient image is determined as:

$$GS(i,j) = \Sigma^1_{n=0} ABS(GSH_n(i,j)) + ABS(GSV_n(i,j))$$

Next, $GS(i,j)$ is decomposed in blocks and the spatiotemporal gradients comprised in $GS(i,j)$ are sectioned accordingly.

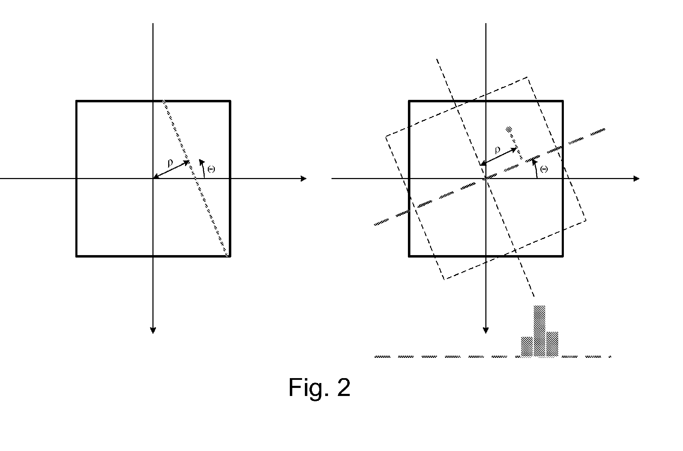

For each possible value of $\theta$, pixels of the sections are projected in the corresponding $\theta$ direction. Practically, all the pixels of the gradients block are projected onto an imaginary line that would cross the block in its center and under an angle of $\theta$ with the horizontal axis, as exemplarily depicted in Fig. 2.

The histogram of the projected gradient sections is determined using a sum of the gradient sections' pixel values, the sum being weighted by mean square gradient variation $\sigma(\rho)$ for each $\rho$ in order to favor straight lines with homogeneous intensity and penalize discontinuous lines with heterogeneous intensity:

$$histo_\theta(\rho) = (1 - \sigma(\rho)) \Sigma_{proj(I,j)=\rho} GS(i,j)$$

wherein, in case $\rho$ is negative, the corresponding parameters $(\theta,\rho)$ are derived as follows:

$$histo_\theta(\rho) = histo_{\theta-\pi}(-\rho)$$

**Claims**

1.   Method for video encoding using geometry adaptive block partitioning, said method comprising the steps of

  - using a current video image for determining a spatiotemporal gradient image,
  - using the determined spatio-temporal gradient image for estimating occurrence frequencies of block partitioning parameter pairs;

- selecting a predetermined number of block partitioning parameter pairs, the selected block partitioning parameter pairs being the most frequent occurring block partitioning parameter pairs; and
- encoding blocks of the current video image using one of the selected block partitioning parameter pairs.

2. Method of claim 1, wherein determining a spatio-temporal gradient image comprises

— determining at least one difference images using at least two of: the current video image, a preceding video image and a succeeding video image;
— applying at least one Sobel filter on the determined at least one difference image for determining at least one gradient image; and
— determining pixels of the spatio-temporal gradient image using absolutes of pixels of the determined at least one gradient image.

3. Device for video encoding using geometry adaptive block partitioning, said device being adapted for performing the method of claim 1 or 2.

Fig. 1

Fig. 2

Europäisches
Patentamt

European
Patent Office

Office européen
des brevets

**EUROPEAN SEARCH REPORT**

Application Number

EP 10 30 6400

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/101707 A1 (MUKHERJEE DEBARGHA [US] ET AL) 1 May 2008 (2008-05-01) * paragraph [0028] - paragraph [0038] * | 1-3 | INV. H04N7/26 H04N7/50 |
| X | ABDULLAH A MUHIT ET AL: "A fast approach for geometry-adaptive block partitioning", PICTURE CODING SYMPOSIUM, 2009. PCS 2009, IEEE, PISCATAWAY, NJ, USA, 6 May 2009 (2009-05-06), pages 1-4, XP031491640, ISBN: 978-1-4244-4593-6 * Section 2 * | 1,3 | |
| A | VERMEIRSCH K. ET AL: "Efficient adaptive-shape partitioning of video", MULTIMEDIA TOOLS AND APPLICATIONS, [Online] 2 September 2010 (2010-09-02), pages 1-33, XP002631220, Springer Netherlands ISSN: 1380-7501, DOI: 10.1007/s11042-010-0593-0 Retrieved from the Internet: URL:http://dx.doi.org/10.1007/s11042-010-0 593-0> [retrieved on 2011-03-29] * Sections 2.3, 3.1 and 3.2 * | 1-3 | |
| A | VIEREN C ET AL: "Catching moving objects with snakes for motion tracking", PATTERN RECOGNITION LETTERS, ELSEVIER, AMSTERDAM, NL, vol. 16, no. 7, 1 July 1995 (1995-07-01), pages 679-685, XP004008690, ISSN: 0167-8655, DOI: DOI:10.1016/0167-8655(95)00019-D * Section 2, pages 679-680 * | 2 | |

TECHNICAL FIELDS SEARCHED (IPC)

H04N

-/--

The present search report has been drawn up for all claims

| Place of search | Date of completion of the search | Examiner |
|---|---|---|
| The Hague | 13 April 2011 | Colesanti, Carlo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

**EUROPEAN SEARCH REPORT**

Application Number

EP 10 30 6400

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | S M HAYNES, R JAIN: "Detection of Moving Edges", COMPUTER VISION, GRAPHICS, AND IMAGE PROCESSING, [Online] vol. 21, no. 3, March 1983 (1983-03), pages 345-367, XP002631221, ISSN: 0734-189X, DOI: 10.1016/S0734-189X(83)80048-6 Retrieved from the Internet: URL:http://www.sciencedirect.com/science/article/B7GXG-4RYDVYB-4/2/b23717d2c0d8ae42360b15881ac3bdf2> [retrieved on 2011-04-04] * Section 3, in particular pages 354-355 * ----- | 2 | |
| A | LIWEI GUO ET AL: "Simplified geometry-adaptive block partitioning for video coding", IMAGE PROCESSING (ICIP), 2010 17TH IEEE INTERNATIONAL CONFERENCE ON, IEEE, PISCATAWAY, NJ, USA, 26 September 2010 (2010-09-26), pages 965-968, XP031811594, ISBN: 978-1-4244-7992-4 * Section 3 * ----- | 1-3 | |
| A | PAN F. ET AL: "Fast Mode Decision Algorithm for Intraprediction in H.264/AVC Video Coding", IEEE TRANSACTIONS ON CIRCUITS AND SYSTEMS FOR VIDEO TECHNOLOGY, IEEE SERVICE CENTER, PISCATAWAY, NJ, US, vol. 15, no. 7, 1 July 2005 (2005-07-01), pages 813-822, XP011135306, ISSN: 1051-8215, DOI: DOI:10.1109/TCSVT.2005.848356 * Sections III and IV * ----- -/-- | 1-3 | |

TECHNICAL FIELDS
SEARCHED       (IPC)

The present search report has been drawn up for all claims

| Place of search | Date of completion of the search | Examiner |
|---|---|---|
| The Hague | 13 April 2011 | Colesanti, Carlo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

## EUROPEAN SEARCH REPORT

**Application Number**

EP 10 30 6400

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHEN P ET AL: "Geometry motion partition", 2. JCT-VC MEETING; 21-7-2010 - 28-7-2010; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, 23 July 2010 (2010-07-23), XP030007629, * the whole document * | 1-3 | |
| A | GBP OSCAR DIVORRA ET AL: "Geometry-adaptive Block Partioning", ITU STUDY GROUP 16 - VIDEO CODING EXPERTS GROUP -ISO/IEC MPEG & ITU-T VCEG(ISO/IEC JTC1/SC29/WG11 AND ITU-T SG16 Q6), XX, XX, no. VCEG-AF10, 19 April 2007 (2007-04-19), XP030003531, * Section 2 * | 1-3 | |

TECHNICAL FIELDS
SEARCHED      (IPC)

The present search report has been drawn up for all claims

| Place of search | Date of completion of the search | Examiner |
|---|---|---|
| The Hague | 13 April 2011 | Colesanti, Carlo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 10 30 6400

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2011

| Patent document cited in search report | Publication date | Patent family member(s) | | Publication date |
|---|---|---|---|---|
| US 2008101707 A1 | 01-05-2008 | CN | 101536528 A | 16-09-2009 |
| | | DE | 112007002493 T5 | 24-09-2009 |
| | | JP | 2010508706 T | 18-03-2010 |
| | | WO | 2008054688 A1 | 08-05-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KENNETH VERMEIRSCH et al.** Report of complexity analysis of geometric partitioning. *JTC1/SC29/WG11 JCTVC-C236, m18277,* October 2010